**Europäisches Patentamt**

**European Patent Office**

**Office européen des brevets**

(19)

(11) Veröffentlichungsnummer: **0 006 159**
**B1**

(12) ## EUROPÄISCHE PATENTSCHRIFT

(45) Veröffentlichungstag der Patentschrift: **24.02.82**

(51) Int. Cl.³: **C 08 F 10/00, C 08 F 6/28**

(21) Anmeldenummer: **79101677.7**

(22) Anmeldetag: **31.05.79**

(54) **Verfahren zur Verminderung des Halogengehalts kleinteiliger, mittels halogenhaltiger Katalysatoren hergestellter Polyolefine.**

(30) Priorität: **19.06.78 DE 2826623**

(43) Veröffentlichungstag der Anmeldung:
**09.01.80 Patentblatt 80/1**

(45) Bekanntmachung des Hinweises auf die Patenterteilung:
**24.02.82 Patentblatt 82/8**

(84) Benannte Vertragsstaaten:
**BE DE FR GB IT NL**

(56) Entgegenhaltungen:
**DE - A - 2 224 558**
**FR - A - 1 378 181**
**FR - A - 1 392 774**

(73) Patentinhaber: **BASF Aktiengesellschaft**
**Carl-Bosch-Strasse 38**
**D-6700 Ludwigshafen (DE)**

(72) Erfinder: **Zeitler, Gerhard, Dr.**
**Lessingstrasse 11**
**D-6711 Hessehim (DE)**
Erfinder: **Schick, Hans, Dr.**
**Am Aubuckel 30**
**D-6800 Mannheim 51 (DE)**

Courier Press, Leamington Spa, England.

### Verfahren zur Verminderung des Halogengehalts kleinteiliger mittels halogenhaltiger Katalysatoren hergestellter Polyolefine

Die vorliegende Erfindung betrifft ein Verfahren zur Verminderung des aus Katalysatorbestandteilen stammenden Halogengehalts Kleinteiliger, mittels halogenhaltiger Ziegler-Natta-Katalysatoren hergestellter, bei Temperaturen oberhalb von 125°C erweichender Polyolefine, durch Behandlung mit einem $C_2$- bis $C_4$-Alkenoxid sowie Wasser.

Verfahren dieser Gattung sind bereits in einigen Varianten bekannt (vlg. z.B. die deutschen Offenlegungsschriften 2 224 558 und 2 258 345) und haben zu beachtlichen Erfolgen geführt; — wenn sie auch den einen oder anderen Wunsch noch offen lassen:

So ist z.B. das Verfahren, bei dem die kleinteiligen Polyolefine in einem Wirbelbett mit einem Alkenoxid und Wasser enthaltenden Wirbelgas behandelt werden, an relativ sehr große Gasvolumina (Stickstoff) gebunden. Dies bringt Abgasprobleme mit sich, entweder hinsichtlich der Reinigung oder hinsichtlich der Umweltbelastung.

Praktisch frei von einer solchen Problematik ist das Verfahren, bei dem die kleinteiligen Polyolefine geschmolzen und in schmelzflüssigem Zustand mit Alkenoxid und Wasser behandelt werden. Bei diesem Verfahren fallen die behandelten Polymerisate notwendigerweise als Extrudat bzw. Granulat an, also in der für die Weiterverarbeitung zu Formteilen gängigsten Form; — die jedoch für einige Anwendungsgebiete — z.B. Verarbeitungsverfahren, die einen Sinterprozeß einschließen — unbrauchbar ist.

Aufgabenstellung zur vorliegenden Erfindung war es, ein Verfahren der eingangs definierten Gattung aufzuzeigen, mit dem es möglich ist, in kleinteiligen Polyolefinen als solchen den Halogengehalt in technisch fortschrittlicher Weise — z.B. ohne oder praktisch ohne Abgasprobleme — zu vermindern.

Es wurde gefunden, daß die gestellte Aufgabe gelöst werden kann, wenn man die kleintiligen Polyolefine unter spezifischen Bedingungen zunächst (1) mit Alkenoxid sowie Wasser unter Durchmischung in einem geschlossenen Gefäß unter Eingendruck auf erhöhter Temperatur hält und dann (2) entspannt und spült.

Geganstand der vorliegenden Erfindung ist dementsprechend ein Verfahren zur Verminderung des aus Katalysatorbestandteilen stammenden Halogengehalts, insbesondere Chlorgehalts, kornförmiger, einen Korndurchmesser von 0,1 bis 3, insbesondere von 0,2 bis 1,5 mm aufweisender, mittels halogenhaltiger, insbesondere chlorhaltiger, Ziegler-Natta-Katalysatoren hergestellter, bei Temperaturen oberhalb von 125°C erweichender Polyolefine durch Behandlung mit einem $C_2$- bis $C_4$-Alkenoxid, insbesondere Propenoxid, sowie Wasser. Das erfindungsgemäße Verfahren ist dadurch gekennzeichnet, daß man zunächst

1) 100 Gewichtsteile Polyolefin mit 0,05 bis 3, vorzugsweise 0,2 bis 2, Gewichtsteilen Alkenoxid sowie 0,3 bis 3, vorzugsweise 0,5 bis 2 Gewichtsteilen Wasser unter ständiger mechanischer Durchmischung in einem geschlossenen Gefäß unter Eigendruck über eine Zeitspanne von wenigstens 3, vorzugsweise 5 bis 20 Minuten auf Temperaturen im Bereich von 100 bis 125, vorzugsweise 110 bis 120°C hält und dann

2) das System entspannt und unter ständiger mechanischer Durchmischung mit der wenigstens 2-fachen, vorzugsweise der 3- bis 20-fachen Volumenmenge — bezogen auf die Volumenmenge des Polyolefins — Stickstoff spült.

Dieses Verfahren eignet sich zur Verminderung des Halogengehaltes insbesondere bei Polyolefinen, denen $C_2$- bis $C_8$-Alkene-(1) zugrunde liegen und vor allem bei Polypropylen. Kleinteilige, mittels halogenhaltiger Ziegler-Natta-Katalysatoren hergestellte Polyolefine, zu deren Behandlung das erfindungsgemäße Verfahren angewandt werden kann, sind die einschlägig üblichen; sie sind wohlbekannt, z.B. als solche, die — ohne Reinigungsbehandlung — erhältlich sind gemäß der deutschen Auslegeschrift 1 217 071 oder der deutschen Offenlegungsschrift 2 139 182.

Die kleinteiligen Polyolefine können Halogengehalte bis zu etwa 5 000 Gewichts-ppm haben; sie haben in Regelfall Halogengehalte von etwa 100 bis 500 Gewichts-ppm. Durch das erfindungsgemäße Verfahren lassen sich die Halogengehalte bis auf etwa 20 bis 50 Gewichts-ppm vermindern.

Das Verfahren selbst kann mit bekannten und üblichen Vorrichtungen durchgeführt werden die eine gute mechanische Durchmischung erlauben, bis etwa 20 bar druckfest sind sowie über die erforderlichen Zu- und Abgangsorgane für die flüssigen bzw. gasförmigen Arbeitsmedien haben. Mit Vorteil kann in entsprechenden Mischern gearbeitet werden, in die man — zweckmäßigerweise bei Raumtemperatur — zunächst das kleinteilige Polyolefin, dann das Alkenoxid sowie Wasser einbringt, und die man anschließend unter Eigendruck des Systems bis zu der gewählten Temperatur aufheizt, schließlich entspannt und endlich mit Stickstoff spült.

### Beispiel

In einem geschlossenen Mischer werden bei Raumtemperatur vorgelegt 100 kg eines kornförmigen, einen Korndurchmesser von 0,1 bis 0,8 mm sowie einen aus Katalysatorbestandteilen stammenden Chlorgehalt von 480 Gewichts-ppm aufweisenden, mittels eines chlorhaltigen Ziegler-Natta-Katalysators durch Gasphasenpolymerisation hergestellten Polypropylens, 1 kg Propenoxid sowie 1 kg Wasser.

Das Ganze wird sodann unter ständiger Durchmischung innerhalb von etwa 15 Minuten auf eine Temperatur von etwa 120°C gebracht; derart befindet sich das zu behandelnde Gut unter Eigendruck über eine Zeitspanne von etwa 6 Minuten auf Temperaturen im Bereich von 100 bis 120°C. Anschließend wird das System entspannt und unter ständiger weiterer Durchmischung mit 600 l Stickstoff gespült. Das Ergebnis ist ein Polypropylen dessen Chlorgehalt auf 30 Gewichts-ppm gesunken ist.

## Patentanspruch

Verfahren zur Verminderung des aus Katalysatorbestandteilen stammenden Halogengehalts kornförmiger, einen Korndurchmesser von 0,1 bis 3 mm aufweisender, mittels halogenhaltiger Ziegler-Natta-Katalysatoren hergestellter, bei Temperaturen oberhalb von 125°C erweichender Polyolefine durch Behandlung mit einem $C_2$- bis $C_4$-Alkenoxid sowie Wasser dadurch gekennzeichnet, daß man zunächst (1) 100 Gewichteile Polyolefin mit 0,05 bis 3 Gewichtsteilen Alkenoxid sowie 0,3 bis 3 Gewichtsteilen Wasser unter ständiger mechanischer Durchmischung in einem geschlossenen Gefäß unter Eigendruck über eine Zeitspanne von wenigstens 3 Minuten auf Temperaturen im Bereich von 100 bis 125°C hält und dann (2) das System entspannt und unter ständiger mechanischer Durchmischung mit der wenigstens 2-fachen Volumenmenge — bezogen auf die Volumenmenge des Polyolefins — Stickstoff spült.

## Claim

A process for the reduction of the content of halogen, stemming from catalyst components, of granular polyolefins which soften at temperatures above 125°C and have been produced with the aid of halogen-containing Ziegler-Natta catalysts, the diameter of the granules being from 0.1 to 3 mm, by treatment with a $C_2$ to $C_4$ alkene oxide and water, characterized in that, to start off with, (1) 100 parts by weight of polyolefin and 0.05 to 3 parts by weight of alkene oxide as well as 0.3 to 3 parts by weight of water are kept at a temperature of from 100°C to 125°C for a period of at least 3 minutes in a closed vessel under autogenous pressure, with continuous mechanical agitation, and then (2) the system is vented and purged with at least two times the amount by volume, based on the amount by volume of polyolefin, of nitrogen, while effecting continuous mechanical agitation.

## Revendication

Procédé pour réduire la teneur en halogène, provenant de composants du catalyseur, de polyoléfines granulées avec une granulométrie entre 0,1 et 3 mm, préparées à l'aide de catalyseurs halogénés selon Ziegler-Natta et possédant un point de ramollissement supérieur à 125°C, par un traitement avec un oxyde d'alcène en $C_2$ à $C_4$ et de l'eau, caractérisé en ce que:
(1) on maintient le mélange de 100 parties en poids de polyoléfine, de 0,05 à 3 parties en poids d'oxyde d'alcène et de 0,3 à 3 parties en poids d'eau dans un récipient fermé, sous une agitation mécanique constante et sous la tension propre du mélange, pendant au moins trois minutes à une température dans la gamme de 100 à 125°C, et
· (2) on détend le système, puis on rince sous agitation mécanique constante avec un volume d'azote au moins double de celui de la polyoléfine.